# EUROPÄISCHE PATENTSCHRIFT

(11) **EP 3 676 930 B1**
(45) Veröffentlichungstag und Bekanntmachung des Hinweises auf die Patenterteilung: **18.05.2022**
(21) Anmeldenummer: 18759606.9
(22) Anmeldetag: 23.08.2018
(51) Int. Cl.: H02J 7/00, H01M 10/42, H02J 9/00

(54) **ENERGIESPEICHERSYSTEM MIT EINEM IN EINEN PASSIVEN ZUSTAND SCHALTBAREN ENERGIESPEICHER**
ENERGY STORAGE SYSTEM HAVING AN ENERGY STORE THAT IS SWITCHABLE IN A PASSIVE STATE
SYSTÈME DE STOCKAGE D'ÉNERGIE COMPRENANT UN ACCUMULATEUR D'ÉNERGIE POUVANT ÊTRE COMMUTÉ À UN ÉTAT PASSIF

(30) Priorität: 28.08.2017 DE 102017119705
(43) Veröffentlichungstag der Anmeldung: 08.07.2020
(73) Patentinhaber: Robert Bosch GmbH, 70442 Stuttgart (DE)
(72) Erfinder: YONGGANG, Du, 60438 Frankfurt am Main (DE); MÖLLER, Christian, 22335 Hamburg (DE)
(86) Internationale Anmeldenummer: PCT/EP2018/072763
(87) Internationale Veröffentlichungsnummer: WO 2019/042858

(56) Entgegenhaltungen:
- US-A1- 2010 055 549
- US-A1- 2011 045 323

## Beschreibung

Die Erfindung betrifft einen Energiespeicher mit mindestens einer Speicherzelle und einem Speicherzellenverwaltungssystem, das einen Ladungsverteilungsschaltkreis zur Überwachung des Ladens und Entladens der Speicherzelle aufweist, wobei der Energiespeicher durch das Speicherzellenverwaltungssystem in einen aktiven Zustand oder in einen passiven Zustand versetzbar ist, gemäß den Merkmalen des Oberbegriffs des Anspruchs 1. Weiterhin betrifft die Erfindung ein Energiespeichersystem mit einem derartigen Energiespeicher.

Der Begriff Energiespeicher betrifft im Folgenden elektrische Energiespeicher. So ein Energiespeicher kann beispielsweise eine Batterie sein, die eine oder mehrere Batteriezellen aufweist. Im Folgenden werden wiederaufladbare Batterien, nämlich Akkumulatoren, ebenfalls als Batterien bezeichnet.

Aus dem Stand der Technik sind Energiespeichersysteme bekannt, bei denen eine Batterie mit einer oder mehreren Zellen in eine Halterung eingeschoben wird. Hierbei wird ein elektrischer Kontakt zwischen der Halterung und der Batterie hergestellt. Elektrische Systeme, die an die Halterung angeschlossen sind, entladen die Batterie über elektrische Kontakte, welche zwischen der Batterie und der Halterung bestehen.

Solch eine aus dem Stand der Technik bekannte Batterie ist über ein oder mehrere Ladeanschlüsse aufladbar. Das Laden und/oder Entladen der Batterie wird durch ein Speicherzellenverwaltungssystem gesteuert. Solche Speicherzellenverwaltungssysteme haben einen gewissen Eigenenergiebedarf. Daher ist es aus dem Stand der Technik bekannt, dass sich diese Speicherzellenverwaltungssysteme mittels einer externen Eingabe, beispielsweise ein durch einen Schalter erzeugtes elektrisches Signal, in einen Tiefschlafzustand zu versetzen, in dem ein Energiebedarf minimiert ist. Bei dem aus dem Stand der Technik bekannten Energiespeichersystem wird der Tiefschlafzustand beendet, indem die Batterie beispielsweise an ein Ladegerät angeschlossen wird.

Bekannte Energiespeichersysteme erfordern also das aktive Schalten des Speicherzellenverwaltungssystems in einen Wach- oder Tiefschlafzustand. Sofern der Tiefschlafzustand nicht aktiviert ist, wird die Batterie durch den Energiebedarf des Speicherzellenverwaltungssystems kontinuierlich entladen. Außerdem ist das Versetzen der Schaltung des Speicherzellenverwaltungssystems und somit der Batterie in den gewünschten Zustand aufwendig und erfordert einen zusätzlichen Handhabungsaufwand seitens des Benutzers.

US 2010/055549 A1 zeigt eine Batterie aus Primärzellen, die Spannungsfrei in Geräte eingesetzt werden soll, um Funkenbildung beim Einsetzen der Batterie zu vermeiden.

US 2011/045323 A1 zeigt einen Akkumulator für tragbare elektronische Geräte, der mindestens eine Speicherzelle aufweist. An die Spannungsausgänge der Speicherzelle wird eine Last geschaltet, wenn ein Schalter durch ein externes Signal eine Bypassleitung unterbricht. Hierdurch soll Funkenbildung beim Einsetzen des Akkumulators vermieden werden.

Aufgabe der Erfindung ist es daher, diese und weitere Nachteile des Stands der Technik zu beseitigen und ein Energiespeichersystem mit einem Energiespeicher bereitzustellen, der eine geringe Selbstentladung aufweist und benutzerfreundlich zwischen einem Wachzustand und einem Tiefschlafzustand in Abhängigkeit von dem Verwendungszweck des Energiespeichersystems umschaltbar ist.

Hauptmerkmale der Erfindung sind im kennzeichnenden Teil von Anspruch 1 und Anspruch 13 angegeben. Vorteilhafte Ausgestaltungen sind Gegenstand der Ansprüche 2 bis 12 und 14 bis 16.

Die Aufgabe wird bei einem Energiespeicher mit mindestens einer Speicherzelle und einem Speicherzellenverwaltungssystem, das einen Ladungsverteilungsschaltkreis zur Überwachung des Ladens und Entladens der Speicherzelle aufweist, wobei der Energiespeicher durch das Speicherzellenverwaltungssystem in einen aktiven Zustand oder in einen passiven Zustand versetzbar ist, dadurch gelöst, dass das Speicherzellenverwaltungssystem eine Logikschaltung mit einem Schalter zur Umschaltung zwischen dem passiven und dem aktiven Zustand aufweist und der Schalter durch das Einsetzen des Energiespeichers in eine Führung schaltbar ist.

Durch diese Ausgestaltung ist der Energiespeicher über die Logikschaltung automatisch in den aktiven Zustand versetzbar, wenn der Energiespeicher in die

Führung eingeschoben ist. Eine externe Spannungsbeaufschlagung ist daher nicht notwendig. Gleichermaßen ist der Energiespeicher in den passiven Zustand versetzbar, wenn der Energiespeicher aus der Führung entnommen wird. Durch das Vorsehen eines solchen Schalters ist der Energiespeicher also ohne eine zusätzliche Benutzereingabe oder ein anderweitig erzeugtes Signal in einen der jeweiligen Situationen angemessenen Zustand versetzbar.

Vorzugsweise ist dafür vorgesehen, dass der Schalter an einer Außenseite des Energiespeichers angeordnet ist. Durch eine derartige Anordnung ergibt sich der Vorteil, dass der Schalter bei Einsetzen des Energiespeichers in eine Führung besonders einfach durch mechanischen Kontakt schaltbar ist.

In einer weiteren Ausgestaltung ist vorgesehen, dass der Schalter federbelastet ist. Ein solcher federbelasteter Schalter kann vorzugsweise als Druckschalter ausgebildet sein. Durch das Vorsehen eines federbelasteten Schalters ergibt sich für den Energiespeicher über die Vorspannung des Schalters ein erster Grundzustand, in dem der Energiespeicher dann geschaltet ist, wenn der Energiespeicher in die Führung eingesetzt und ein zweiter Grundzustand, wenn der Energiespeicher nicht in die Führung eingesetzt ist. Bevorzugt ist ein solcher federbelasteter Schalter derart vorgespannt, dass der Schalter durch das Einsetzen des Energiespeichers in die Führung in Richtung des Energiespeichers drückbar ist. Besonders bevorzugt ist durch die Logikschaltung bei dem Eindrücken des Schalters der Energiespeicher in einen aktiven Zustand schaltbar. Hieraus ergibt sich, dass durch die Logikschaltung der Energiespeicher in den passiven Zustand versetzbar ist, wenn der Schalter aufgrund der Federbelastung vom Energiespeicher weg bewegt wird und der Energiespeicher außerhalb der Führung angeordnet ist.

Nach einer weiteren Ausgestaltung der Erfindung ist vorgesehen, dass die Speicherzelle jeweils mit dem Ladungsverteilungsschaltkreis und der Logikschaltung elektrisch verbunden ist. Durch das Vorsehen einer elektrischen Verbindung zwischen der Logikschaltung und der Speicherzelle ergibt sich der Vorteil, dass die Logikschaltung permanent über die Speicherzelle mit einer Betriebsspannung versorgt ist. Auf diese Weise kann die Logikschaltung unabhängig von dem Zustand des Energiespeichers und/oder dem Zustand des Speicherzellenverwaltungssystems logische Signale erzeugen. Bevorzugt werden diese unabhängig erzeugten logischen Signale an den Ladungsverteilungsschaltkreis geleitet, wodurch der Energiespeicher in den aktiven oder in den passiven Zustand versetzbar ist. Besonders bevorzug ist die Speicherzelle jeweils permanent mit dem Ladungsverteilungsschaltkreis und der Logikschaltung elektrisch verbunden. In einer weiteren vorteilhaften Ausführungsform ist vorgesehen, dass die Logikschaltung mit einer oder mehreren der Speicherzellen des Energiespeichers direkt verbunden ist.

In einer näheren Ausgestaltung der Erfindung ist vorgesehen, dass an einem Spannungsausgang des Energiespeichers in dem aktiven Zustand eine elektrische Spannung anliegt und an dem Spannungsausgang des Energiespeichers in dem passiven Zustand keine elektrische Spannung anliegt. Bevorzugt wird das Anlegen bzw. Abschalten der elektrischen Spannung an dem Spannungsausgang durch den Ladungsverteilungsschaltkreis bewirkt, wobei die Logikschaltung ein Steuersignal an das Speicherzellenverwaltungssystem leitet und die Zustandsumschaltung durch das Speicherzellenverwaltungssystem erfolgt. Dadurch, dass in dem passiven Zustand keine elektrische Spannung anliegt, ergibt sich weiterhin der Vorteil, dass der Energiespeicher in den passiven Zustand über den Spannungsausgang nicht entladbar ist.

Außerdem ist nach einer Ausgestaltung der Erfindung vorgesehen, dass die Logikschaltung immer in einem aktiven Zustand verbleibt. Auf diese Weise ist die Logikschaltung von der Umschaltung des Energiespeichers zwischen dem passiven und dem aktiven Zustand ausgenommen. Hieraus ergibt sich der Vorteil, dass durch die Logikschaltung auch dann ein Schalten des Energiespeichers in den aktiven Zustand erfolgen kann, wenn der Energiespeicher sich in dem passiven Zustand befindet.

In einer Ausgestaltung der Erfindung ist vorgesehen, dass der Energiespeicher durch das Erfüllen einer in dem Ladungsverteilungsschaltkreis vorgegebenen Bedingung in den passiven Zustand schaltbar ist. Eine solche Bedingung kann beispielsweise das Unterschreiten eines vorgegebenen Laststroms an einem Spannungsausgang des Energiespeichers oder beispielsweise auch an einem Spannungseingang des Speicherzellenverwaltungssystems sein. Weiterhin kann als Bedingung der Ablauf einer gewissen Zeit, in der dem Energiespeicher keine Ladung entnommen wurde, vorgegeben sein. Hieraus ergibt sich der Vorteil, dass der Energiespeicher auch bei

Nichtbetätigen des Schalters und Erreichen der vorgegebenen Bedingung in den passiven Zustand schaltbar ist.

In einer Weiterbildung dieser Ausgestaltung ist vorgesehen, dass durch die Logikschaltung bei Betätigung des Schalters ein impulsartiges Steuersignal zur Umschaltung von dem passiven Zustand in den aktiven Zustand erzeugbar ist. Dadurch, dass sich durch die Betätigung des Schalters ein impulsartiges Steuersignal von der Logikschaltung zur Umschaltung von dem passiven Zustand in den aktiven Zustand erzeugen lässt, ergibt sich der Vorteil, dass der Energiebedarf zur Aktivierung des Energiespeichers sehr gering ist.

Außerdem ist in einer weiteren Form dieser Ausgestaltung vorgesehen, dass das impulsartige Steuersignal über eine Eingangsspannungsleitung an das Speicherzellenverwaltungssystem leitbar ist. Eine solche Eingangsspannungsleitung kann beispielsweise eine Leitung sein, über die der Energiespeicher aufladbar ist. Durch das Ausnutzen der Eingangsspannungsleitung zur Übermittlung des impulsartigen Steuersignals ergibt sich der Vorteil, dass die Anzahl der benötigten Leitungen zum Betrieb eines in einem passiven Zustand oder in einen aktiven Zustand schaltbaren Energiespeichers verringert wird.

In einer alternativen Ausgestaltung ist vorgesehen, dass durch die Logikschaltung ein Steuersignal zum Wechseln zwischen dem aktiven Zustand und dem passiven Zustand erzeugbar ist. Bevorzugt schaltet die Logikschaltung entsprechend der Schaltstellung des Schalters das Speicherzellenverwaltungssystem mit dem Steuersignal, wodurch der Energiespeicher in den jeweiligen Zustand versetzbar ist. Auf diese Weise ist vorteilhaft sichergestellt, dass sich der Energiespeicher immer in einem der Schaltstellung des Schalters entsprechenden Zustand befindet. Besonders bevorzugt ist das Steuersignal durchgängig.

In einer Weiterbildung dieser Ausgestaltungen ist vorgesehen, dass der Schalter aus einem nicht-leitenden Material ist. Beispielsweise kann ein solches Material ein Kunststoff sein. Daraus, dass der Schalter aus einem nicht-leitenden Material ist, ergibt sich der Vorteil, dass die Logikschaltung und weitere Schaltungen in den Energiespeicher gegenüber der Führung in Bezug auf eine Verbindung, die zwischen dem Energiespeicher und der Führung über das Anliegen des Schalters an der

Führung hergestellt sein könnte, elektrisch isoliert ist. Somit kann weitestgehend sichergestellt werden, dass die Führung aufgrund eines Kontaktes des Schalters mit der Führung weitestgehend spannungsfrei ist. Dies betrifft insbesondere ein Gehäuse der Führung.

In einer alternativen Weiterbildung der oben genannten Ausgestaltungen ist vorgesehen, dass über den Schalter ein Ladestrom an den Ladungsverteilungsschaltkreis leitbar ist. Bevorzugt wird hierbei ein Ladekontakt des Energiespeichers als Schalter genutzt. Besonders bevorzugt wird hierbei ein federbelasteter Ladekontakt des Energiespeichers als Schalter genutzt. Aus dieser alternativen Weiterbildung ergibt sich der Vorteil, dass kein gesondertes Element zur Schaltung des Energiespeichers zwischen dem passiven Zustand und dem aktiven Zustand vorgesehen sein muss.

Weiterhin ist ein Energiespeichersystem Gegenstand der Erfindung, dass einen Energiespeicher nach einer der oben beschriebenen Ausgestaltungen bzw. Weiterbildungen dieser Ausgestaltungen aufweist, wobei das Energiespeichersystem eine Führung aufweist und wobei der Energiespeicher in die Führung einschiebbar ist. Durch das Vorsehen einer Führung für den Energiespeicher wird der Energiespeicher vorteilhafterweise in der Führung gehalten. Bevorzugt erfolgt dies durch Formschluss oder Kraftschluss. Als weiterer Vorteil ergibt sich hieraus, dass bei einem Einschieben in die Führung durch Kontakt mit der Führung eine Betätigung des Schalters erfolgt. Somit wird der Energiespeicher beim Einschieben in die Führung unmittelbar von dem passiven Zustand in den aktiven Zustand umgeschaltet. Alternativ kann der Energiespeicher auch auf eine andere Art und Weise mit der Führung in Kontakt gebracht werden. Beispielsweise kann das Energiespeichersystem derart ausgebildet sein, dass der Energiespeicher mit der Führung derart in Eingriff bringbar ist, dass der Energiespeicher in die Führung eingesetzt, eingelegt oder eingeschraubt wird.

In einer Ausgestaltung des Energiespeichersystems ist vorgesehen, dass der Schalter des Energiespeichers gedrückt ist, wenn der Energiespeicher in einer in der Führung eingeschobenen Position ist. Aus dieser Ausgestaltung ergibt sich der Vorteil, dass die Logikschaltung, welche bevorzugt mit dem Schalter verbunden ist, immer in einem der Schaltstellung des Schalters entsprechenden Zustand ist.

Eine weitere Ausgestaltung des Energiespeichersystems sieht vor, dass der Schalter des Energiespeichers nicht gedrückt ist, wenn der Energiespeicher außerhalb der Führung ist. Dies gestaltet sich insbesondere dann vorteilhaft, wenn vorzugsweise für den Schalter ein vorgespannter Schalter, wie z. B. ein federbelasteter Schalter oder ein Druckschalter, verwendet wird. Somit ist nach dieser weiteren Ausgestaltung des Energiespeichersystems sichergestellt, dass durch einen solchen, wie oben beschriebenen, Schalter der Energiespeicher in einem Zustand außerhalb der Führung über die Logikschaltung in den passiven Zustand schaltbar ist, ohne dass weitere Handhabungen, beispielsweise seitens des Benutzers, erforderlich sind. Damit nach dieser Ausgestaltung das Energiespeichersystem nicht durch ein versehentliches Drücken des Schalters, wenn der Energiespeicher außerhalb der Führung ist, aktiviert wird, kann vorgesehen sein, dass der Schalter in einer Position außerhalb der Führung des Energiespeichers blockiert oder gesichert ist.

Nach einer weiteren Ausgestaltung des Energiespeichersystems ist vorgesehen, dass die Führung eine Halterung für ein Fahrzeug, insbesondere eine Halterung für einen Lenker eines Zweirads, aufweist. Durch das Vorsehen einer Halterung ist das Energiespeichersystem und insbesondere der Energiespeicher an einem Lenker eines Zweirads befestigbar. Somit steht an dem Zweirad die in dem Energiespeichersystem gespeicherte Energie, beispielsweise für elektrische Verbraucher, zur Verfügung. Solche elektrischen Verbraucher können Beleuchtung, Mobiltelefone, Navigationsgeräte oder sonstige elektrische Verbraucher sein, welche üblicherweise im Bereich eines Lenkers eines Zweirads, vorzugsweise eines Fahrrades montiert werden. Besonders bevorzugt weist die Halterung eine Montagemöglichkeit für ein Mobiltelefon auf. Weiterhin ergibt sich der Vorteil, dass durch eine derartige Montage des Energiespeichersystems ein Ladesystem durch die Führung und über einen Ladekontakt einen in die Führung eingesetzten Energiespeicher aufladen kann. Teil eines solchen Ladesystems kann vorzugsweise ein Dynamo, insbesondere ein Nabendynamo, sein, der an dem Vorderrad des Zweirads montiert ist. Alternativ kann die Führung einen elektrischen Eingang für eine Ladespannung aufweisen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Figur 1 ein schematisches Blockbild des Energiespeichersystems mit der Führung und dem Energiespeicher sowie den in dem Energiespeicher angeordneten elektrischen Komponenten,
Figur 2 eine teilweise, vereinfachte Darstellung der Logikschaltung,
Figur 3 eine schematische Darstellung eines Schalters, insbesondere eines Druckschalters,
Figur 4 eine teilweise Darstellung eines Schaltbildes einer Weiterbildung einer Ausgestaltung der Logikschaltung,
Figur 5 eine teilweise schematische Darstellung eines Schaltbildes einer alternativen Ausgestaltung der Logikschaltung und
Figur 6 eine Weiterbildung der alternativen Ausgestaltung der Logikschaltung in einem teilweise dargestellten Schaltbild in einem schematischen Aufbau.

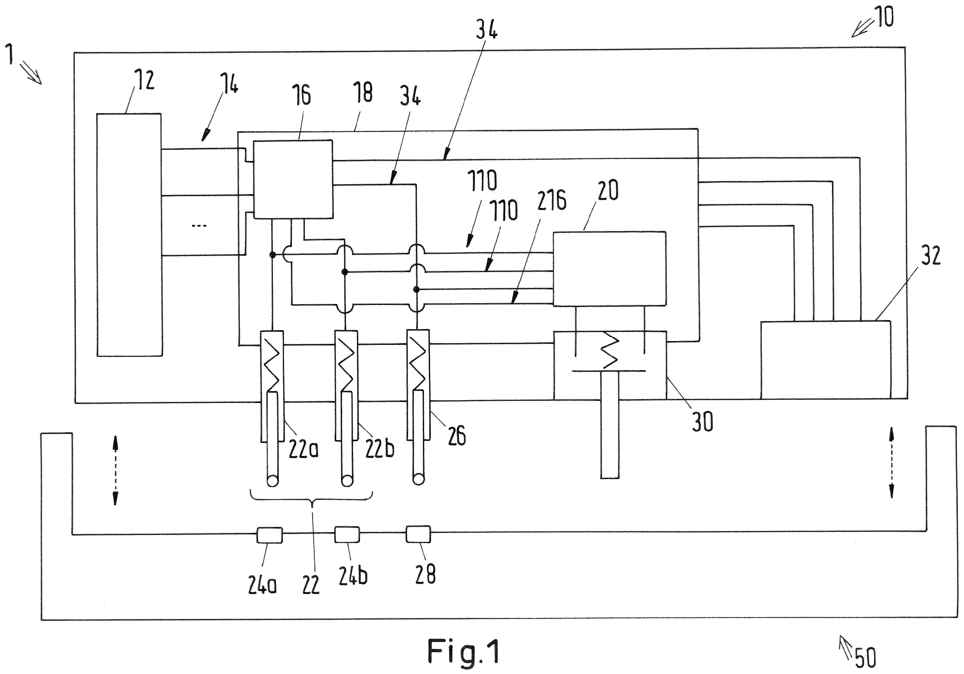

Fig. 1 zeigt eine schematische Darstellung eines Energiespeichersystems 1 mit einem Energiespeicher 10 und einer Führung 50. Der Energiespeicher 10 weist mindestens eine Speicherzelle 12 auf, wobei die mindestens eine Speicherzelle 12 durch eine Speicherzellenleitung 14 mit einem Ladungsverteilungsschaltkreis 16 elektrisch leitend verbunden ist.

### Der Ladungsverteilungsschaltkreis 16 ist Teil eines

Speicherzellenverwaltungssystems 18, welches das Laden und Entladen der mindestens einen Speicherzelle 12, sowie die Überführung des Energiespeichers 10 von einem aktiven Zustand in einen passiven Zustand bewirkt. Hierfür weist das Speicherzellenverwaltungssystem 18 eine Logikschaltung 20 auf.

Wenn der Energiespeicher 10 in die Führung 50 eingeschoben wird, dann wird ein Spannungsausgang 22 mit Ausgängen 22a, 22b des Energiespeichers 10 mit Kontakten 24 der Führung 50 in Überdeckung gebracht, sodass ein elektrischer Kontakt jeweils zwischen den Kontakten 24a, 24b und dem Spannungsausgang 22 ermöglicht ist. Weiterhin kann das Energiespeichersystem 1 einen Ladeeingang 26 aufweisen, der mit einem Ladekontakt 28 in Überdeckung bringbar ist, wenn der Energiespeicher 10 in die Führung 50 eingeschoben ist. Der Spannungsausgang 22 kann als Gleichspannungsausgang ausgebildet sein, wobei ein erster Ausgang 22a gegenüber einem zweiten Ausgang 22b ein elektrisches Potential aufweist und einer der beiden Ausgänge, bevorzugt der zweite Ausgang 22b, ein Massepotential hat.

Bei diesem Ausführungsbeispiel sind die den Spannungsausgang 22 und den Ladeeingang 26 bildenden Elemente an einer Außenseite des Energiespeichers 10 angeordnet, welche sich auf einer der Führung 50 zugewandten Seite befindet, wenn der Energiespeicher 10 in die Führung 50 eingeschoben wird.

Bevorzugt sind die dem Spannungsausgang 22 und dem Ladeeingang 26 bildenden Elemente als Federkontakte ausgebildet, die eine mechanische Vorspannung aufweisen und einfedern, sobald sie mit den Kontakten 24 oder dem Ladekontakt 28 in Überdeckung gebracht werden.

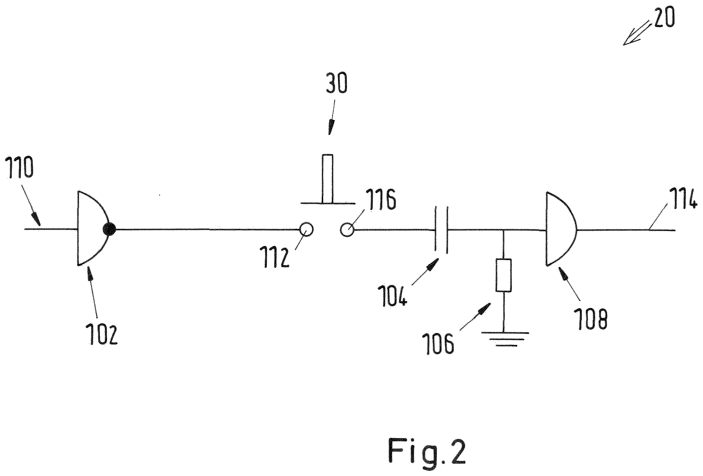

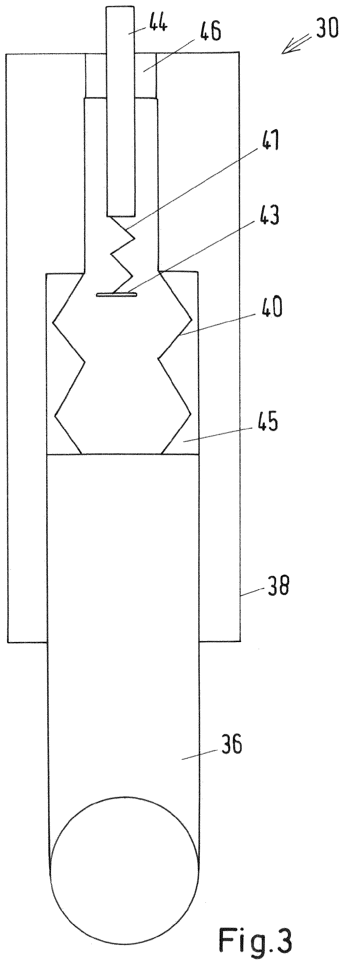

Ferner weist die Logikschaltung 20 einen Schalter 30 auf. Dieser Schalter 30 kann gemäß einer Ausführungsform als separater Schalter ausgebildet sein (vgl. Fig. 1, 2, 5) oder in den Ladeeingang 26 integriert sein (vgl. Fig. 2, 3, 6). Die Integration des Schalters 30 in den Ladeeingang 26 wird untenstehend unter Bezugnahme auf die Figuren 3, 4, 6 weiter erläutert.

Gemäß Fig. 1 weist der Energiespeicher 10 weiterhin einen Ladeanschluss 32 auf, welcher alternativ oder zusätzlich zu dem Ladeeingang 26 vorgesehen sein kann. Sowohl der Ladeanschluss 32 als auch der Ladeeingang 26 sind über zwei getrennte Aufladeleitungen 34 mit dem Ladungsverteilungsschaltkreis 16 des Speicherzellenverwaltungssystems 18 verbunden.

Das Vorsehen eines Ladeanschlusses 32 hat den Vorteil, dass der Energiespeicher 10 in einer Position außerhalb der Führung 50 über den Ladeanschluss 32 aufladbar ist ohne, dass an den Ladeeingang 26 eine Lademöglichkeit angeschlossen werden muss.

Der Energiespeicher 10 wird in die Führung 50 eingeschoben. Alternativ kann der Energiespeicher 10 auch in die Führung 50 eingelegt, eingesetzt, eingeschraubt oder auf ähnliche Weise mit der Führung 50 in Eingriff gebracht werden. Jedenfalls wird der

Energiespeicher 10 mit der Führung 50 derart in Eingriff gebracht, dass zwischen dem Energiespeicher 10 und der Führung 50 eine formschlüssige oder kraftschlüssige Verbindung hergestellt ist und die Kontakte 24 mit dem Spannungsausgang 22 korrespondieren und ggf. der Ladekontakt 28 mit dem Ladeeingang 26 korrespondiert.

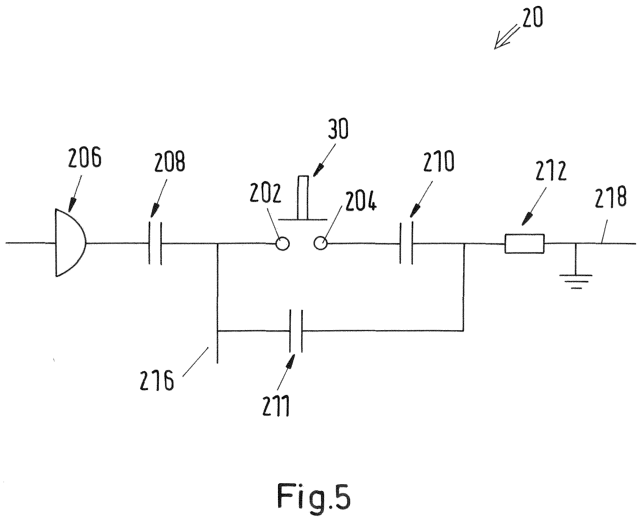

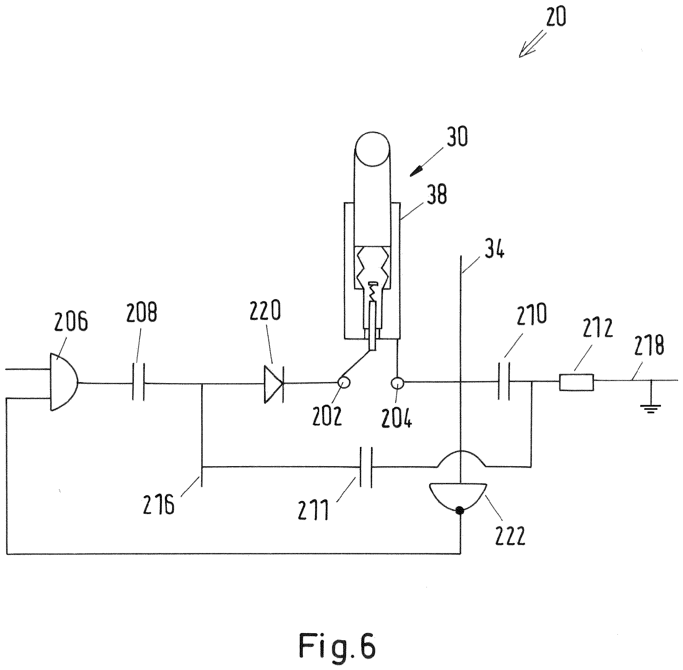

Bei einer Ausgestaltung des Energiespeichers 10 nach Fig. 5 oder Fig. 6 ist vorgesehen, dass eine Signalleitung 216 innerhalb des Speicherzellenverwaltungssystems 18 den Ladungsverteilungsschaltkreis 16 mit der Logikschaltung verbindet. Ein durch die Logikschaltung 20 erzeugtes Signal dient der Umschaltung des Energiespeichers 10 durch das Speicherzellenverwaltungssystem 18 in einen aktiven Zustand oder in einen passiven Zustand.

Fig. 2 zeigt die Logikschaltung 20 gemäß einer ersten Ausgestaltung des Energiespeichers 10. Die Logikschaltung 20 gemäß dieser Ausgestaltung weist ein NAND-Gatter 102, einen Kondensator 104, einen Widerstand 106, ein AND-Gatter 108 sowie den Schalter 30 auf.

Die Logikschaltung 20 gemäß der ersten Ausgestaltung des Energiespeichers 10 wird permanent mit Strom aus der mindestens einen Speicherzelle 12 des Energiespeichers 10 versorgt. Auf diese Weise ist die Logikschaltung 20 von dem Zustand des Energiespeichers 10, egal ob aktiver Zustand oder passiver Zustand, unabhängig.

Die Stromversorgung der Logikschaltung 20 ist in der schematischen Fig. 2 nicht dargestellt. An der Zuleitung 110 der Logikschaltung liegt die Ausgangsspannung des Ladungsverteilungsschaltkreises 16 an, die aus dem Spannungsausgang 22 geleitet wird. Mittels des NAND-Gatters 102 wird die an der Zuleitung 110 anliegende Spannung mit der Versorgungsspannung der Logikschaltung 20 verglichen, sodass an den ersten Schaltkontakt 112 des Schalters 30 ein High-Pegel anliegt, wenn sich der Energiespeicher in dem passiven Zustand befindet. In dem passiven Zustand liegt nämlich an dem Spannungsausgang 22 keine Spannung an, während an der immerwährenden Stromversorgung, die in Fig. 2 nicht dargestellt ist, die Spannung der mindestens einen Speicherzelle 12 anliegt. Aufgrund der Logik des NAND-Gatters 102 ergibt sich der High-Pegel für den ersten Schaltkontakt 112.

Für den Fall, dass der Energiespeicher 10 in dem aktiven Zustand ist, wird an dem ersten Schaltkontakt 112 ein Low-Pegel anliegen, da am Spannungsausgang 22 und

somit an der Zuleitung 110 die Ausgangsspannung des Ladungsverteilungsschaltkreises 16 anliegt und an der immerwährenden Stromversorgung, die in Fig. 2 nicht dargestellt ist, die Spannung der mindestens einen Speicherzelle 12 anliegt. Aufgrund der Logik des NAND-Gatters 102 ergibt sich der Low-Pegel für den ersten Schaltkontakt 112.

Ein Ausgang 114 des AND-Gatters 108 ist mit der Aufladeleitung 34 verbunden. In dem passiven Zustand des Energiespeichers 10 ist der Schalter 30 geöffnet. Somit ist der Kondensator 104 nicht geladen und es liegt am Ausgang 114 der Logikschaltung 20 ein Low-Pegel an, da der Eingang des AND-Gatters 108 über einen Widerstand 106 mit der Masse verbunden ist.

Wenn der Energiespeicher 10 in die Führung 50 eingeschoben wird, dann schließt sich der Schalter 30, wodurch der erste Kontakt 112 und der zweite Kontakt 116 der Logikschaltung 20 verbunden werden. Durch das Schließen des Schalters 30 liegt dann auch an dem zweiten Kontakt 116 der High-Pegel des ersten Kontaktes 112 an, sofern der Energiespeicher 10 in dem passiven Zustand ist.

Da sich die Spannung der Kondensators 104 nicht abrupt ändern kann, werden die Kondensatorplatten des Kondensators 104 zunächst auf den High-Pegel des Ausgangs des NAND-Gatters 102 gezogen. Somit liegt auch am Eingang des AND- Gatters 108 dieser High-Pegel an. Somit ändert sich nach Schließen des Schalters 30 der Pegel des Ausgangs 114 der Logikschaltung 20 von einem Low-Pegel auf einen High-Pegel. Anschließend entlädt sich der Kondensator 104 über den Widerstand 106, so dass die Spannung gegen Masse an der mit dem AND-Gatter 108 verbundenen Kondensatorplatte gegen Null abnimmt. Die mit dem Schalter 30 verbundene Kondensatorplatte bleibt unverändert auf dem High-Pegel des Ausgangs des NAND-Gatters 102.

Das Produkt der Kapazität des Kondensators 104 und des Widerstandswerts des Widerstands 106 bestimmt eine Zeitkonstante, mit der die Spannung an dem Eingang des AND-Gatters 108 einen Low-Pegel erreicht. Durch Wahl einer geeigneten Kapazität für den Kondensator 104 und eines geeigneten Widerstandswerts für den Widerstand 106 kann gewährleistet werden, dass die Spannung am Eingang des AND- Gatter 108 genügend lang auf dem High-Pegel bleibt, somit auch die Spannung am

Ausgang 114 des AND-Gatters 108 genügend lang auf dem High-Pegel bleibt, so dass der Ladungsverteilungsschaltkreis 16 eine stabile High-Pegel Spannung auf der mit dem Ladeeingang 26 verbundenen Aufladeleitung 34 erfährt, da diese Aufladeleitung 34 direkt mit dem Ausgang 114 des AND-Gatters 108 verbunden ist.

Nach diesem Ausführungsbeispiel gemäß Fig. 2 ist der Ladungsverteilungsschaltkreis 16 so eingerichtet, dass wenn auf einer der Aufladeleitung 34 eine High-Pegel Spannung anliegt, der Ladungsverteilungsschaltkreis 16 den Energiespeicher 10 in den aktiven Zustand umschaltet.

Dementsprechend liegt an der Zuleitung 110 der Logikschaltung 20 nach Umschalten des Schalters 30 ein High-Pegel bzw. die Spannung des Spannungsausgangs 22 des Ladungsverteilungsschaltkreises 16 an, da der Energiespeicher 10 in dem aktiven Zustand ist.

Das NAND-Gatter 102 gibt nun an dessen Ausgang und somit an den ersten Schaltkontakt 112 aufgrund der Logik des NAND-Gatters 102 einen Low-Pegel aus. Dieser Low-Pegel führt dazu, dass sich eine schalterseitige Kondensatorplatte des Kondensators 104 abrupt auf den Low-Pegel einstellt, während die Spannungsdifferenz zwischen den beiden Kondensatorplatten des Kondensators 104 zunächst unverändert bleibt. Der Kondensator 104 entlädt sich dann weiter über den Widerstand 106, bis die Spannung (gegen Masse) an der AND-Gatter-seitigen Kondensatorplatte des Kondensators 104 den Wert Null erreicht.

Sobald die Spannung am Eingang des AND-Gatters 108 auf einen Low-Pegel gesunken ist, ändert sich das Signal am Ausgang 114 des AND-Gatters 108 von einem High-Pegel auf einen Low-Pegel. Diese Umschaltung der Spannung am Ausgang 114 hat keine Auswirkung auf den Ladungsverteilungsschaltkreis 16, da dieser nur auf einen Spannungsänderung von einem Low-Pegel auf einen High-Pegel reagiert, um den Energiespeicher 10 vom passiven in den aktiven Zustand umzuschalten.

Durch das Vorsehen einer derartigen Logikschaltung 20 muss lediglich sichergestellt werden, dass am Ausgang des AND-Gatters 108 nach dem Schließen des Schalters 30 für einen Zeitraum, der durch die Abstimmung der Kennwerte des Kondensators 104 und des Widerstands 106 bestimmt ist, ein stabiler High-Pegel an dem Ausgang 114 anliegt.

Hierbei ist die Kombination zwischen Kondensator 104 und Widerstand 106 so gewählt, dass der durch die Logikschaltung 20 erzeugte High-Pegel lang genug anliegt, dass er von dem Ladungsverteilungsschaltkreis 16, wenn der Pegel über eine der Aufladeleitungen 34 an den Ladungsverteilungsschaltkreis 16 übermittelt wurde, verarbeitbar ist.

Gemäß der Ausgestaltung nach Fig. 2 wird der Ladungsverteilungsschaltkreis 16 den Energiespeicher 10 durch Erreichen einer geeigneten Bedingung nach Öffnen des Schalters 30 zurück in den passiven Zustand setzen.

Eine solche Bedingung kann beispielsweise das Unterschreiten eines gewissen Entladestroms am Spannungsausgang 22 oder der Ablauf einer Zeitspanne sein, in der aus dem Energiespeicher keine Ladung entnommen wurde. Weitere Bedingungen, die darauf zurückzuführen sind, dass dem Energiespeicher 10 keine Ladung entnommen wird, sind außerdem denkbar.

Wenn der Ladungsverteilungsschaltkreis 16 den Energiespeicher 10 bei geöffnetem Schalter 30 in den passiven Zustand zurückgeführt hat, dann liegt die Ausgangsbedingung für die Logikschaltung 20 gemäß diesem Ausführungsbeispiel nach Fig. 2 wieder vor.

Fig. 3 zeigt einen Schalter 30 gemäß einer der Weiterbildung der Ausgestaltungen. Dieser Schalter 30 ist als federbelasteter Druckschalter ausgebildet und kann gleichzeitig als Kontakt, insbesondere als Ladeeingang 26 wirken.

Hierfür sieht der Schalter 30 einen Kontaktteil 36 vor, der in einem Zylinderkörper 38 federbelastet gelagert ist. Der Kontaktteil 36 ist mit dem Zylinderkörper 38 leitend verbunden. Mindestens eine elektrisch leitende Feder 40 ist auf einer axialen Seite mit dem Kontaktteil 36 und auf einer anderen axialen Seite mit dem Zylinderkörper 38 fest verbunden.

Der Schalter 30 weist weiterhin einen Sitzstift 44 auf, der in einem Bereich, der dem Kontaktteil 36 des Schalters 30 gegenüberliegt, über einen Isolationsteil 46 fest mit dem Zylinderkörper 38, dabei aber nicht leitend, verbunden ist. An dem Sitzstift 44 ist an dessen innenliegenden Ende eine Kontaktfeder 41 angeordnet, wobei auf der dem

Sitzstift 44 gegenüberliegenden Seite der Kontaktfeder 41 eine kleine Kontaktfläche 43 angeordnet ist, die in den großen Zylinderraum 45 des Zylinderkörpers 38 hineinragt.

Ein derart ausgebildeter Schalter 30 weist nun zwei Schaltkontakte auf, nämlich an der Außenseite des Sitzstiftes 44 und an der Außenseite des Zylinderkörpers 38.

Wenn der Kontaktteil 36 so weit in den Zylinderkörper 38 eingeschoben ist, dass der Kontaktteil 36 und die kleine Kontaktfläche 43 in Kontakt kommen, ist gleichzeitig eine Verbindung zwischen dem Zylinderkörper 38 und dem Sitzstift 44 hergestellt. Bevorzugt ist hierbei an der der kleinen Kontaktfläche 43 zugewandten Seite des Kontaktteils 36 eine korrespondierende Kontaktfläche vorgesehen.

Sofern ein solcher Schalter 30 als Ladeeingang 26 eines Energiespeichers 10, wie in Fig. 1 beschrieben, eingesetzt wird, dann ist eine Eingangsspannung über dem den Ladeeingang 26 bildenden Schalter 30, insbesondere über dessen Zylinderkörper 38 an der mit dem Ladeeingang 26 verbundenen Aufladeleitung 34 leitbar, welche mit dem Ladungsverteilungsschaltkreis 16 verbunden ist.

Gleichermaßen wird gemäß Fig. 3 durch den Schalter 30 ein in Abhängigkeit von der Position des Energiespeichers 10 zu der Führung 50 geschalteter Kontakt über das Zusammenwirken der kleinen Kontaktfläche 43 mit dem Kontaktteil 36 unterbrochen.

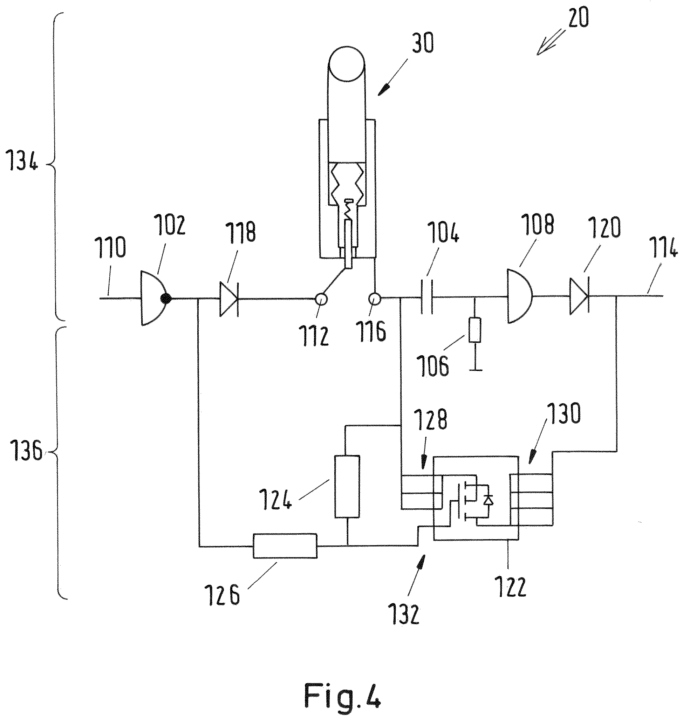

Fig. 4 zeigt ein schematisches Schaltbild einer Weiterbildung einer Ausgestaltung der Logikschaltung 20 mit dem Schalter 30 gemäß Fig. 3.

An dem Sitzstift 44 des Schalters 30 ist der erste Schaltkontakt 112 der Logikschaltung 20 gemäß diesem Ausführungsbeispiel verbunden. Der zweite Schaltkontakt 116 ist mit dem Zylinderkörper 38 des Schalters 30 verbunden. Diese Logikschaltung 20 weist weiterhin das AND-Gatter 108 und das NAND-Gatter 102 sowie den Kondensator 104 und den Widerstand 106 auf. Zwischen dem NAND-Gatter 102 und dem ersten Schaltkontakt 112 befindet sich eine erste Diode 118. Eine zweite Diode 120 befindet sich zwischen dem Ausgang 114 und dem AND-Gatter 108.

Über den Schalter 30 ist der erste Schaltkontakt 112 mit dem zweiten Schaltkontakt 116 verschaltbar, während der Schalter 30 gleichzeitig als Ladeeingang 26 verwendbar ist. Hierfür weist der Schalter 30 den Kontaktteil 36 auf, welcher mit dem Ladekontakt 28 der Führung 50 in Überdeckung bringbar ist (vgl. Fig. 1 und 3).

Gemäß der Weiterbildung der Logikschaltung 20 nach Fig. 4 ist analog zu der Logikschaltung 20 nach Fig. 1 2 die Stromversorgung der Logikschaltung 20 nicht dargestellt.

Die Logikschaltung 20 gemäß Fig. 4 weist weiterhin einen Transistor 122 und einen vor dem Transistor 122 vorgeschalteten ersten Widerstand 124 und einen vor dem Transistor 122 vorgeschalteten zweiten Widerstand 126 auf.

Der Transistor 122 ist als P-Kanal-MOSFET ausgebildet und weist einen Source-Kanal 128, einen Drain-Kanal 130 und ein Gate 132 auf. Das Gate 132 ist über dem zweiten Widerstand 126 mit dem Ausgang des NAND-Gatters 102 verbunden.

Wenn der Energiespeicher 10 in die Führung 50 eingeschoben wird, dann verursacht der obere Bereich 134 der Schaltung gemäß Fig. 4, welcher das NAND-Gatter 102, die erste Diode 118, den ersten Schaltkontakt 112, den zweiten Schaltkontakt 116, den Kondensator 104, den Widerstand 106, das AND-Gatter 108, die zweite Diode 120 und den Ausgang 114 einschließt und mit der mit dem Ladeeingang 26 verbundenen Aufladeleitung 34 (nicht dargestellt) verbunden ist, einen Spannungsimpuls. Dieser Spannungsimpuls liegt dann am Ausgang 114 des oberen Bereichs 134 an.

Die Dioden 118 und 120 sind hierbei im Durchlass, wobei der Spannungsabfall an den Dioden 118 und 120 keine Auswirkung auf die logischen Bauteile der Logikschaltung 20 gemäß dem Ausführungsbeispiel in Fig. 4 hat.

Wenn der hervorgerufene Spannungsimpuls für eine genügende lange Zeit einen High- Pegel aufweist, dann ist an der Zuleitung des NAND-Gatters 102 ein High-Pegel vorhanden, da der Energiespeicher 10 durch diesen Spannungsimpuls in den aktiven Zustand versetzt worden ist. Aufgrund der NAND-Logik liegt am Ausgang des NAND- Gatters 102 und somit auch an dem ersten Schaltkontakt 112 ein Low-Pegel. Der Kondensator 104 entlädt sich dann weiter über den Widerstand 106, bis die Spannung (gegen Masse) an der AND-Gatter-seitigen Kondensatorplatte des Kondensators 104 den Wert Null erreicht.

Sobald die Spannung am Eingang des AND-Gatters 108 auf einen Low-Pegel gesunken ist, ändert sich das Signal am Ausgang 114 des AND-Gatters 108 von einem High-Pegel auf einen Low-Pegel. Diese Umschaltung der Spannung am Ausgang 114 hat keine Auswirkung auf den Ladungsverteilungsschaltkreis 16, da dieser nur auf eine Spannungsänderung von einem Low-Pegel auf einen High-Pegel reagiert, um den Energiespeicher 10 vom passiven in den aktiven Zustand umzuschalten.

Wenn eine Ladespannung an dem Schalter 30, weil dieser gleichzeitig als Ladeeingang 26 in dem Ausführungsbeispiel gemäß Fig. 4 verwendet wird, angelegt wird, dann ändert sich die Spannung von dem ersten Schaltkontakt 112 und dem zweiten Schaltkontakt 116 auf einen High-Pegel, da die Schaltkontakte 112 und 116 miteinander in Verbindung stehen, wenn der Energiespeicher 10 in die Führung 50 eingesetzt ist.

Zunächst wird über den Kondensator 104 ein erneuter Spannungsimpuls über das AND-Gatter 108 erzeugt, der am Ausgang 114 anliegt (vgl. die Ausführungen zu Fig. 2). Gleichzeitig liegt ein Spannungsabfall zwischen dem Source-Kanal 128 und dem Gate 132 vor, der so groß ist, dass der Transistor 122 leitend wird. Somit findet eine Durchleitung einer Ladespannung, die an den Ladeeingang 26 (in Fig. 1) bzw. an den Kontaktteil 36 (in Fig. 3), dem Zylinderkörper 38 und letztlich dem zweiten Kontakt 116 anliegt, über dem Transistor 122 an den Ausgang 114 statt.

Der Energiespeicher 10 wird ab diesem Zeitpunkt direkt mit der am Schalter 30 bzw. Ladeeingang 26 anliegenden Ladespannung geladen, solange die Ladespannung groß genug ist, um den Transistor 122 leitend zu halten. Der Kondensator 104 entlädt sich dann weiter über den Widerstand 106, bis die Spannung (gegen Masse) an der AND- Gatter-seitigen Kondensatorplatte des Kondensators 104 den Wert Null erreicht. Das heißt, dass nach einer gewissen Zeit nach der Anlegung einer Ladespannung an dem Kontaktteil 36 des Schalters 30 die Spannungen an dem Eingang und an dem Ausgang des AND-Gatters 108 den Wert Null aufweisen, während an dem Kondensator 104 und an der Diode 120 die volle Ladespannung vorliegen.

Die Dimensionierung des ersten Widerstands 124 und des zweiten Wiederstands 126 muss gewährleisten, dass der Source-Kanal 128 und der Drain-Kanal 130 voneinander elektronisch isoliert sind, falls der Energiespeicher 10 im passiven Zustand ist, das heißt, falls ein Low-Pegel an der Zuleitung 110 anliegt.

Weiterhin muss die Dimensionierung der Widerstände 124 und 126 gewährleisten, dass im aktiven Zustand des Energiespeichers 10 der Source-Kanal 128 und der

Drain-Kanal 130 voneinander elektronisch isoliert sind, falls am Ladeeingang 26 keine Ladespannung anliegt.

Beispielhaft kann vorgesehen sein, dass der erste Widerstand 124 einen Wert von 100 kΩ aufweist und der zweite Widerstand 126 einen Wert von 4,7 kΩ aufweist. Weiterhin ist die Ausführungsform des Transistors 122 als P-Kanal-MOSFET beispielhaft gewählt.

Fig. 5 zeigt eine teilweise Darstellung der Logikschaltung 20 nach einer weiteren Ausgestaltung der Logikschaltung 20 gemäß einem weiteren Ausführungsbeispiel.

Die Logikschaltung 20 nach Fig. 5 zeigt einen Schalter 30, durch den ein erster Schaltkontakt 202 und ein zweiter Schalterkontakt 204 miteinander verbindbar sind. Weiterhin weist die Logikschaltung 20 gemäß diesem Ausführungsbeispiel ein AND- Gatter 206 sowie einen ersten Kondensator 208 auf. Auf der Schaltungsseite des zweiten Schaltkontakts 204 sind weiterhin ein zweiter Kondensator 210 sowie ein Widerstand 212 angeordnet. Ein dritter Kondensator 211 ist mit einer Seite zwischen dem zweiten Kondensator 210 und dem Widerstand 212 angeordnet und mit einer anderen Seite an einer Signalleitung 216. Die Signalleitung 216 ist mit einem Ende zwischen dem ersten Kondensator 208 und dem ersten Schalterkontakt 202 angeordnet. Das andere Ende des Widerstands 212 ist mit der Masse 218 verbunden.

An den Eingängen des AND-Gatters 206 (in Fig. 5 ist nur ein Eingang dargestellt) liegt ständig die Versorgungsspannung, d.h. ein High-Pegel, an. Somit ist auf der Ausgangsseite des AND-Gatters 206 ständig ein High-Pegel vorhanden. Wie untenstehend beschrieben, ist bei einem geöffneten Schalter 30 der Pegel der Signalleitung 216 durch die entsprechende Ladung der Kondensatorplatten des ersten Kondensators 208 ebenfalls ein High-Pegel. Bei geöffnetem Schalter 30 fließt kein Strom durch die Schaltungsseite des zweiten Schalterkontakts 204. Wenn das Kapazitätsverhältnis des ersten Kondensators 208 zu dem dritten Kondensator 211 so gewählt wird, dass es deutlich größer als 1 ist, dann fällt wegen der Serienschaltung der Kondensatoren 208 und 211 ein High-Pegel, der am Ausgang des AN D-Gatters 206 anliegt, bei geöffnetem Schalter 30 in einem stationären Zustand hauptsächlich an dem dritten Kondensator 211 ab. Das führt dazu, dass die Spannung an der Signalleitung 216 ebenfalls ein High-Pegel ist.

Wenn der Energiespeicher 10 in die Führung 50 eingeschoben wird, dann schließt sich der Schalter 30, wodurch der erste Schaltkontakt 202 und der zweite Schaltkontakt 204 miteinander verbunden werden. Die Spannung am Ausgang des AND-Gatters 206 bleibt auf einem High-Pegel.

Durch den elektrischen Kontakt zwischen den Schaltkontakten 202 und 204 stellt sich in der Logikschaltung 20 ein stationärer Zustand ein, wobei sich die Spannung am Ausgang des AND-Gatters 206 auf den ersten Kondensator 208 und die Parallelschaltung des zweiten Kondensators 210 und des dritten Kondensators 211 verteilt.

Die Kapazität der Parallelschaltung des zweiten Kondensators 210 und des dritten Kondensators 211 entspricht der Summe der Kapazitäten dieser beiden Kondensatoren, wobei die Spannung an dem zweiten Kondensator 210 aufgrund der Parallelschaltung gleich der Spannung am dritten Kondensator 211 ist.

Das Verhältnis der Spannung an dem ersten Kondensator 208 zu der Spannung an dem zweiten Kondensator 210 hängt von dem Verhältnis der Kapazität des ersten Kondensators 208 zu der Kapazität der Parallelschaltung des zweiten Kondensators 210 und des dritten Kondensators 211 ab.

Wenn das Kapazitätsverhältnis der Kapazität des ersten Kondensators 208 zu der Summe der Kapazitäten in der Parallelschaltung aus dem zweiten Kondensator 210 und dem dritten Kondensators 211 so gewählt wird, dass es deutlich kleiner als 1 ist, dann fällt der High-Pegel am Ausgang von dem AND-Gatter 206 hauptsächlich an dem ersten Kondensator 208 ab. Damit wird erreicht, dass an dem ersten Schaltkontakt 202 sowie auch an der Signalleitung 216 ein Low-Pegel anliegt.

Wird die Bedingung für den Fall des offenen Kontakts zwischen den Kontaktstellen 202 und 204 berücksichtigt, muss es nun insgesamt gelten, dass das Kapazitätsverhältnis des ersten Kondensators 208 zu dem dritten Kondensator 211 so gewählt wird, dass es deutlich größer als 1 ist und das Kapazitätsverhältnis der Kapazität des ersten Kondensators 208 zu der Summe der Kapazitäten in der Parallelschaltung aus dem zweiten Kondensator 210 und dem dritten Kondensators 211 so gewählt wird, dass es deutlich kleiner als 1 ist.

Mit der Schaltung gemäß der Ausgestaltung nach Fig. 5 ist der Pegel der Signalleitung 216 abhängig von dem Schaltzustand des Schalters 30. Wenn der Schalter 30 geschaltet ist, dann ist der Pegel der Signalleitung 216 ein Low-Pegel. Wenn der Schalter 30 nicht geschaltet ist, dann ist der Pegel der Signalleitung 216 ein High-Pegel.

Die Signalleitung 216 ist innerhalb des Speicherzellenverwaltungssystems 18 mit dem Ladungsverteilungsschaltkreis 16 verbunden. Wenn an der Signalleitung 216 ein High- Pegel anliegt, dann wird der Ladungsverteilungsschaltkreis 16 den Energiespeicher 10 aufgrund einer in den Ladungsverteilungsschaltkreis 16 vorhandenen Logik in den passiven Zustand versetzen.

Analog versetzt der Ladungsverteilungsschaltkreis 16 den Energiespeicher 10 bei Vorliegen eines Low-Pegels an der Signalleitung 216 in den aktiven Zustand.

Somit wird erreicht, dass der Energiespeicher 10 bei einem offenen Schalter 30 immer im passiven Zustand ist und der Energiespeicher 10 analog bei einem geschlossenen Schalter 30 immer in dem aktiven Zustand ist.

Fig. 6 zeigte eine Weiterbildung der zweiten Ausgestaltung der Logikschaltung 20. Die zweite Ausgestaltung der Logikschaltung 20, auf der die Weiterbildung nach Fig. 6 basiert, ist in Fig. 5 dargestellt.

In Fig. 6 ist die mit dem Ladeeingang 26 verbundenen Aufladeleitung 34 direkt mit dem zweiten Schaltkontakt 204 verbunden. Ferner weist die Logikschaltung 20 nach Fig. 6 zwischen der Signalleitung 216 und dem ersten Schaltkontakt 202 eine Diode 220 auf. Außerdem weist die Logikschaltung 20 zwischen der Aufladeleitung 34 und einem Eingang des AND-Gatters 206 ein NAND-Gatter 222 auf.

Wenn der Energiespeicher 10 nicht in die Führung 50 eingesetzt ist, dann ist der Schalter 30 geöffnet. Auf diese Weise liegt auf der Aufladeleitung 34 ein Low-Pegel, was dazu führt, dass am Ausgang des NAND-Gatters 222 ein High-Pegel anliegt. Dies ist der Fall, da an einem zweiten, nicht dargestellten, Eingang des NAND-Gatters 222 ein High-Pegel permanent anliegt, welcher beispielsweise durch eine Spannung der mindestens einen Speicherzelle 12 bereitgestellt werden kann.

Auf diese Weise weist einer der Eingänge des AND-Gatters 206 einen High-Pegel auf. Der andere Eingang des AND-Gatters 206 ist, genau wie der nicht dargestellte Eingang des NAND-Gatters 222, an einen High-Pegel, wie z. B. die Spannung der Speicherzelle 12, angeschlossen.

Somit liegt am Ausgang des AND-Gatters 206 ebenfalls ein High-Pegel an, wodurch der erste Kondensator 208 und der dritte Kondensator 211 aufgeladen werden. Bei geöffnetem Schalter 30 fließt kein Strom durch die Schaltungsseite des zweiten Schalterkontakts 204.

Wenn das Kapazitätsverhältnis des ersten Kondensators 208 zu dem dritten Kondensator 211 so gewählt wird, dass es deutlich größer als 1 ist, dann fällt ein High- Pegel, der am Ausgang des AND-Gatters 206 anliegt, bei geöffnetem Schalter 30 in einem stationären Zustand hauptsächlich an dem dritten Kondensator 211 ab. Das führt dazu, dass die Spannung an der Signalleitung 216 ebenfalls ein High-Pegel ist.

Wenn der Energiespeicher 10 in die Führung 50 eingeschoben ist, dann schließt sich der Schalter 30, wodurch ein elektrischer Kontakt zwischen dem ersten Schaltkontakt 202 und dem zweiten Schaltkontakt 204 hergestellt wird.

Solange an dem Zylinderkörper 38 des Schalters 30 keine Spannung anliegt, wie beispielsweise eine über dem Ladeeingang 26 eingeleitete Ladespannung, bleibt auch bei einem geschlossenen Schalter 30 die Spannung am Ausgang des NAND-Gatters 222 auf einem High-Pegel.

Die Ausgangsspannung des AND-Gatters 206 verteilt sich näherungsweise auf den ersten Kondensator 208 und die Parallelschaltung des zweiten Kondensators 210 und des dritten Kondensators 211, da die kleine Durchlassspanung der Diode 220 vernachlässigt werden kann.

Wenn das Kapazitätsverhältnis der Kapazität des ersten Kondensators 208 zu der Summe der Kapazitäten in der Parallelschaltung aus dem zweiten Kondensator 210 und dem dritten Kondensators 211 so gewählt wird, dass es deutlich kleiner als 1 ist, dann fällt der High-Pegel am Ausgang von dem AND-Gatter 206 hauptsächlich an dem ersten Kondensator 208 ab.

Dementsprechend wird die Spannung an der Signalleitung 216 zu einem LOW-Pegel.

Wird die Bedingung für den Fall des offenen Kontakts zwischen den Kontaktstellen 202 und 204 berücksichtigt, muss insgesamt gelten, dass das Kapazitätsverhältnis des ersten Kondensators 208 zu dem dritten Kondensator 211 so gewählt wird, dass es deutlich größer als 1 ist und das Kapazitätsverhältnis der Kapazität des ersten Kondensators 208 zu der Summe der Kapazitäten in der Parallelschaltung aus dem zweiten Kondensator 210 und dem dritten Kondensators 211 so gewählt wird, dass es deutlich kleiner als 1 ist. Außerdem muss die Durchlassspannung der Diode 220 vernachlässigbar sein.

Bei einem Ladungsverteilungsschaltkreis 16, gemäß den Ausführungen zu Fig. 5, schaltet der Ladungsverteilungsschaltkreis 16 bei Anliegen eines Low-Pegels an der Signalleitung 216 den Energiespeicher 10 in den aktiven Zustand.

Das bedeutet, dass durch den Schalter 30, der geschlossen ist, wenn der Energiespeicher 10 in die Führung 50 eingeschoben ist, der Energiespeicher 10 in den aktiven Zustand geschaltet wird.

Wenn in diesem aktiven Zustand an dem Ladeeingang 26, der durch den Kontaktteil 36 des Schalters 30 in diesem Ausführungsbeispiel gebildet ist, eine Ladespannung angelegt wird, sperrt zunächst die Diode 220.

Außerdem wird die Spannung am Ausgang des NAND-Gatters 222 zu einem Low- Pegel, da an seinem Eingang ein High-Pegel vorliegt. Dadurch bildet sich gemäß den
Ausführungen oben am Ausgang des AND-Gatters 206 ebenfalls ein Low-Pegel aus.

Dies hat zur Folge, dass sich der erste Kondensator 208 über den niederohmigen Ausgang des AND-Gatters 222 entlädt, sodass nach einiger Zeit keine Spannung mehr an dem ersten Kondensator 208 vorherrscht.

Folglich liegt an der Signalleitung 216 ein Low-Pegel an, selbst wenn eine Ladespannung an der Aufladeleitung 34 anliegt. Der passive Zustand des Energiespeichers 10 wird erst dann erreicht, wenn der Schalter 30 geöffnet wird und an der Aufladeleitung 34 keine Spannung mehr anliegt. Also dann, wenn der Energiespeicher 10 aus der Führung 50 entnommen ist und nicht geladen wird. Während des optionalen Ladevorgangs (Anliegen einer Ladespannung an der mit dem

Ladeeingang 26 verbundenen Aufladeleitung 34 liegt an der Diode 220 und an dem Kondensator 210 im stationären Zustand die gesamte Ladespannung an.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Energiespeicher (10) mit mindestens einer Speicherzelle (12) und einem Speicherzellenverwaltungssystem (18), das einen Ladungsverteilungsschaltkreis (16) zur Überwachung des Ladens und Entladens der Speicherzelle (12) aufweist, wobei der Energiespeicher (10) durch das Speicherzellenverwaltungssystem (18) in einen aktiven Zustand oder in einen passiven Zustand versetzbar ist, wobei das Speicherzellenverwaltungssystem (18) eine Logikschaltung (20) mit einem Schalter (30) zur Umschaltung zwischen dem passiven und dem aktiven Zustand aufweist, **gekennzeichnet dadurch, dass** der Schalter (30) durch das Einsetzen des Energiespeichers (10) in eine Führung (50) schaltbar ist.

2. Energiespeicher (10) nach Anspruch 1, **dadurch gekennzeichnet, dass** der Schalter (30) an einer Außenseite des Energiespeichers (10) angeordnet ist.

3. Energiespeicher (10) nach einem der vorhergehenden Ansprüche, **dadurch gekennzeichnet, dass** der Schalter (30) federbelastet ist.

4. Energiespeicher nach einem der vorhergehenden Ansprüche, **dadurch gekennzeichnet, dass** die Speicherzelle (12) jeweils mit dem Ladungsverteilungsschaltkreis (16) und der Logikschaltung (20) elektrisch verbunden ist.

5. Energiespeicher (10) nach einem der vorhergehenden Ansprüche, **dadurch gekennzeichnet, dass** an einem Spannungsausgang (22) des Energiespeichers (10) in dem aktiven Zustand eine elektrische Spannung anliegt und am dem Spannungsausgang (22) des Energiespeichers (10) in dem passiven Zustand keine elektrische Spannung anliegt.

6. Energiespeicher (10) nach einem der vorhergehenden Ansprüche, **dadurch gekennzeichnet, dass** die Logikschaltung (20) immer in einem aktiven Zustand verbleibt.

7. Energiespeicher (10) nach einem der vorhergehenden Ansprüche, **dadurch gekennzeichnet, dass** der Energiespeicher (10) durch das Erfüllen einer in dem Ladungsverteilungsschaltkreis (16) vorgegebenen Bedingung in den passiven Zustand schaltbar ist.

8. Energiespeicher (10) nach einem der vorhergehenden Ansprüche, **dadurch gekennzeichnet, dass** durch die Logikschaltung (20) bei Betätigung des Schalters (30) ein impulsartiges Steuersignal zur Umschaltung von dem passiven Zustand in den aktiven Zustand erzeugbar ist.

9. Energiespeicher (10) nach einem der vorhergehenden Ansprüche, **dadurch gekennzeichnet, dass** das impulsartige Steuersignal über eine Aufladeleitung (34) an das Speicherzellenverwaltungssystem (18) leitbar ist.

10. Energiespeicher (10) nach Anspruch 1 bis 6, **dadurch gekennzeichnet, dass** durch die Logikschaltung (20) ein Steuersignal zum Wechseln zwischen dem aktiven Zustand und dem passiven Zustand erzeugbar ist.

11. Energiespeicher (10) nach einem der vorhergehenden Ansprüche, **dadurch gekennzeichnet, dass** der Schalter (30) aus einem nichtleitenden Material ist.

12. Energiespeicher (10) nach einem der Ansprüche 1 bis 10, **dadurch gekennzeichnet, dass** über den Schalter (30) ein Ladestrom an den Ladungsverteilungsschaltkreis (16) leitbar ist.

13. Energiespeichersystem (1) mit einem Energiespeicher (10) nach einem der vorhergehenden Ansprüche, **dadurch gekennzeichnet, dass** das Energiespeichersystem (1) eine Führung (50) aufweist, wobei der Energiespeicher (1) in die Führung (50) einschiebbar ist.

14. Energiespeichersystem (1) nach Anspruch 13, **dadurch gekennzeichnet, dass** der Schalter (30) des Energiespeichers gedrückt ist, wenn der Energiespeicher (10) in einer in der Führung (50) eingeschobenen Position ist.

15. Energiespeichersystem (1) nach einem der Ansprüche 13 oder 14, **dadurch gekennzeichnet, dass** der Schalter (30) des Energiespeichers (10) nicht gedrückt ist, wenn der Energiespeicher (10) außerhalb der Führung (50) ist.

16. Energiespeichersystem (1) nach einem der Ansprüche 13 bis 15, **dadurch gekennzeichnet, dass** die Führung (50) eine Halterung für ein Fahrzeug, insbesondere eine Halterung für einen Lenker eines Zweirads aufweist.

## Claims

1. Energy storage unit (10) comprising at least one storage cell (12) and a storage cell management system (18) that has a charge distribution circuit (16) for monitoring the charging and discharging of the storage cell (12), wherein the energy storage unit (10) can be put into an active state or into a passive state by the storage cell management system (18), wherein the storage cell management system (18) has a logic circuit (20) with a switch (30) for switching over between the passive and the active state, **characterized in that** the switch (30) can be switched by inserting the energy storage unit (10) into a guide (50).

2. Energy storage unit (10) according to Claim 1, **characterized in that** the switch (30) is arranged on an outer side of the energy storage unit (10).

3. Energy storage unit (10) according to either of the preceding claims, **characterized in that** the switch (30) is spring-loaded.

4. Energy storage unit according to one of the preceding claims, **characterized in that** the storage cell (12) is in each case electrically connected to the charge distribution circuit (16) and the logic circuit (20).

5. Energy storage unit (10) according to one of the preceding claims, **characterized in that** a voltage is present at a voltage output (22) of the energy storage unit (10) in the active state and no voltage is present at the voltage output (22) of the energy storage unit (10) in the passive state.

6. Energy storage unit (10) according to one of the preceding claims, **characterized in that** the logic circuit (20) always remains in an active state.

7. Energy storage unit (10) according to one of the preceding claims, **characterized in that** the energy storage unit (10) can be switched to the passive state by satisfying a condition predetermined in the charge distribution circuit (16).

8. Energy storage unit (10) according to one of the preceding claims, **characterized in that** a pulsed control signal for switching over from the passive state to the active state can be generated by the logic circuit (20) upon actuation of the switch (30).

9. Energy storage unit (10) according to one of the preceding claims, **characterized in that** the pulsed control signal can be conducted to the storage cell management system (18) via a charging line (34).

10. Energy storage unit (10) according to Claims 1 to 6, **characterized in that** a control signal for changing between the active state and the passive state can be generated by the logic circuit (20).

11. Energy storage unit (10) according to one of the preceding claims, **characterized in that** the switch (30) is made from a non-conductive material.

12. Energy storage unit (10) according to one of Claims 1 to 10, **characterized in that** a charging current can be conducted to the charge distribution circuit (16) via the switch (30).

13. Energy storage system (1) comprising an energy storage unit (10) according to one of the preceding claims, **characterized in that** the energy storage system (1) has a guide (50), wherein the energy storage unit (1) can be inserted into the guide (50).

14. Energy storage system (1) according to Claim 13, **characterized in that** the switch (30) of the energy storage unit is pressed when the energy storage unit (10) is in a position inserted in the guide (50).

15. Energy storage system (1) according to either of Claims 13 and 14, **characterized in that** the switch (30) of the energy storage unit (10) is not pressed when the energy storage unit (10) is outside of the guide (50).

16. Energy storage system (1) according to one of Claims 13 to 15, **characterized in that** the guide (50) has a holder for a vehicle, in particular a holder for the handlebars of a two-wheeled vehicle.

## Revendications

1. Accumulateur d'énergie (10) comprenant au moins une cellule accumulatrice (12) et un système de gestion de cellule accumulatrice (18) qui comporte un circuit de distribution de charge (16) destiné à surveiller la charge et la décharge de la cellule accumulatrice (12), l'accumulateur d'énergie (10) pouvant être mis dans un état actif ou dans un état passif par le système de gestion de cellules accumulatrices (18), le système de gestion de cellules accumulatrices (18) comportant un circuit logique (20) pourvu d'un commutateur (30) destiné à commuter entre l'état passif et l'état actif, **caractérisé en ce que** le commutateur (30) peut être commuté par l'insertion de l'accumulateur d'énergie (10) dans un guide (50).

2. Accumulateur d'énergie (10) selon la revendication 1, **caractérisé en ce que** le commutateur (30) est disposé sur un côté extérieur de l'accumulateur d'énergie (10).

3. Accumulateur d'énergie (10) selon l'une des revendications précédentes, **caractérisé en ce que** le commutateur (30) est commandé par ressort.

4. Accumulateur d'énergie selon l'une des revendications précédentes, **caractérisé en ce que** la cellule accumulatrice (12) est reliée électriquement respectivement au circuit de distribution de charge (16) et au circuit logique (20).

5. Accumulateur d'énergie (10) selon l'une des revendications précédentes, **caractérisé en ce qu'**une tension électrique est présente à une sortie de tension (22) de l'accumulateur d'énergie (10) à l'état actif et aucune tension électrique n'est présente à la sortie de tension (22) de l'accumulateur d'énergie (10) à l'état passif.

6. Accumulateur d'énergie (10) selon l'une des revendications précédentes, **caractérisé en ce que** le circuit logique (20) reste toujours dans un état actif.

7. Accumulateur d'énergie (10) selon l'une des revendications précédentes, **caractérisé en ce que** l'accumulateur d'énergie (10) peut être commuté à l'état passif en satisfaisant à une condition spécifiée dans le circuit de distribution de charge (16).

8. Accumulateur d'énergie (10) selon l'une des revendications précédentes, **caractérisé en ce qu'**un signal de commande impulsionnel destiné à la commutation de l'état passif à l'état actif peut être généré par le circuit logique (20) lors de l'actionnement du commutateur (30).

9. Accumulateur d'énergie (10) selon l'une des revendications précédentes, **caractérisé en ce que** le signal de commande impulsionnel peut être amené au système de gestion de cellules accumulatrices (18) sur une ligne de charge (34).

10. Accumulateur d'énergie (10) selon les revendications 1 à 6, **caractérisé en ce qu'**un signal de commande peut être généré par le circuit logique (20) afin d'effectuer le passage entre l'état actif et l'état passif.

11. Accumulateur d'énergie (10) selon l'une des revendications précédentes, **caractérisé en ce que** le commutateur (30) est en un matériau non conducteur.

12. Accumulateur d'énergie (10) selon l'une des revendications 1 à 10, **caractérisé en ce qu'**un courant de charge peut être amené au circuit de distribution de charge (16) par le biais du commutateur (30).

13. Système à accumulateur d'énergie (1) comprenant un accumulateur d'énergie (10) selon l'une des revendications précédentes, **caractérisé en ce que** le système à accumulateur d'énergie (1) comporte un guide (50), l'accumulateur d'énergie (1) pouvant être inséré dans le guide (50).

14. Système à accumulateur d'énergie (1) selon la revendication 13, **caractérisé en ce que** le commutateur (30) de l'accumulateur d'énergie est pressé lorsque l'accumulateur d'énergie (10) est dans une position enfoncée dans le guide (50).

15. Système à accumulateur d'énergie (1) selon l'une des revendications 13 ou 14, **caractérisé en ce que** le commutateur (30) de l'accumulateur d'énergie (10) n'est pas pressé lorsque l'accumulateur d'énergie (10) est à l'extérieur du guide (50).

16. Système à accumulateur d'énergie (1) selon l'une des revendications 13 à 15, **caractérisé en ce que** le guide (50) comporte un support destiné à un véhicule, notamment un support destiné à un guidon d'un deux-roues.
